# EUROPEAN PATENT APPLICATION

(11) **EP 4 757 296 A1**
(43) Date of publication of application: **10.06.2026**
(21) Application number: 24218069.3
(22) Date of filing: 06.12.2024
(51) Int. Cl.: H04L 69/18, H04L 69/24, H04W 4/50

(54) **SECURE ELEMENT, SYSTEM AND METHOD FOR SECURE REMOTE APPLICATION MANAGEMENT AND/OR FILE MANAGEMENT**

(71) Applicant: Giesecke+Devrient Mobile Security Germany GmbH, 81677 München (DE)
(72) Inventor: MISHRA, Santosh Kumar, 110 020 New Delhi (IN); PANDEY, Ankit, 110 020 New Delhi (IN)
(74) Representative: Ter Meer Steinmeister & Partner

(57) **Abstract**

According to an aspect of the present disclosure, a secure element including at least one application to securely communicate over a mobile communication network is provided. The secure element comprises a secure storage unit, in which a configuration for remote application management and/or file management is stored. The secure element further comprises a secure control unit, which is configured to receive a capability report from a terminal device hosting the secure element. Moreover, the control unit is configured to adapt the configuration based on the received capability report.

## Description

The present invention relates to a secure element and a system comprising a terminal device comprising the secure element to securely communicate over a mobile communications network based on a secure remote application management and/or file management. The invention further relates to corresponding methods of the secure element, the terminal device and the system.

Massive amounts of devices connect daily to existing mobile communication networks. The number of devices, in particular terminal devices or end (user) devices, is increasing at an accelerating pace due to the fourth industrial revolution which is driven by the Internet of Things, IoT.

For a secured communication over the mobile communication network, a mobile communication is required to include a secure element, in particular a subscriber identity module, SIM. The secure element may host a plurality of applications of which each one implements a specific function of the secure element. These functions may be accessed and/or enabled during an administration session, which is a connection between the secure element, in particular a security domain (SD) of the secure element, and a remote entity, in particular a remote administration server (RAS).

A new administration session may be triggered externally by the remote entity using a predetermined command, e.g., the PUSH command as specified in ETSI TS 102 226 (V.18.4.0). The PUSH command may act as administration session triggering message. In reaction thereto, the secure element, in particular its SD, may trigger the terminal device which hosts the secure element to establish the connection to the remote entity.

The connection is based on a physical transport layer, which is encoded by a transport protocol or Bearer Independent Protocol (BIP). The terminal device may be configured to support a specific transport protocol, such as the Transmission Control Protocol (TCP) and/or the User Datagram Protocol (UDP). That is, the terminal device may be set up to support only one or the other transport protocol.

The PUSH request or command as specified, e.g., in ETSI TS 102 226 (V.18.4.0) enables an application on the secure element to open a BIP channel upon a remote entity request. Thereto, the PUSH command may include a list of parameters necessary to establish the BIP channel (also referred to as a connection or link) to the remote entity. The request for open channel allows a remote entity to ask an application on the secure element to open the BIP channel using the OPEN CHANNEL proactive command specified in ETSI TS 102 223. To open the BIP channel, an alignment on the transport protocol to be used between the remote entity and the terminal device must be achieved.

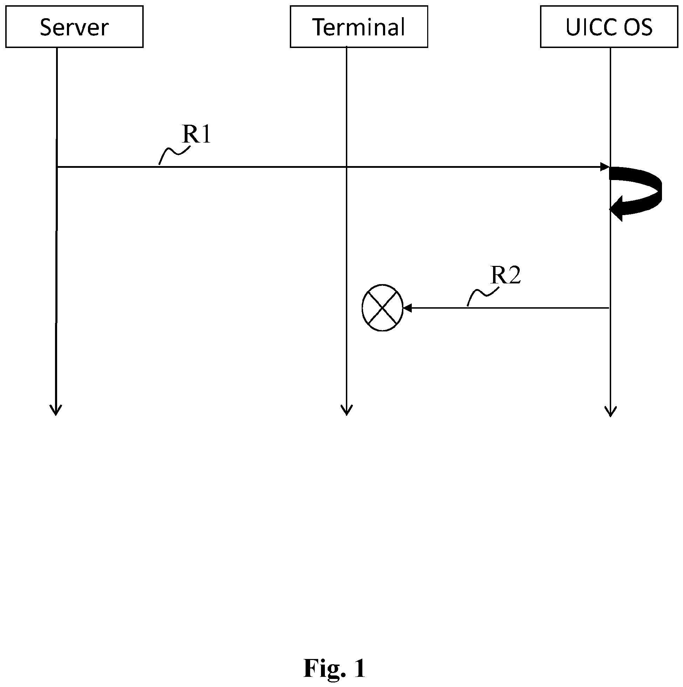

In practice, the PUSH request may leave out the parameter specifying the transport protocol to be used, e.g., by providing the administration session triggering parameters, represented by the tag '81' in the PUSH command with empty subtags, in particular empty subtag '84' (RAS Connection Parameter) under tag '81' (Administration session triggering parameters) in combination with subtag '83' (Administration Session Parameters) and empty subtag '89' (HTTP POST Parameters or CoAP POST Parameters) under tag '81' in combination with subtag '83'. The tag '81' is specified in section 3.7 Administration Session Triggering Message of the norm Global Platform Amendment B (Remote Application Management over HTTP). In this scenario, the secure element determines which transport protocol is to be used for establishing the connection to the remote entity based on its configuration. Accordingly, the secure element instructs the terminal device to open a new communication channel using a predefined transport protocol. However, this scenario may lead to a deadlock when trying to establish the connection between the remote entity and the secure element, as depicted in the flow chart of Fig. 1.

In Fig. 1, the remote entity externally requests a new connection by triggering the secure element in step R1, however, without providing a parameter that specifies which transport protocol to use. The secure element may be configured to use the TCP as default and requests the terminal device to open a new channel based on the TCP. The terminal device, however, may be configured to communicate using the UDP, instead, and therefore fails to establish the new connection to the remote entity upon the request R2 of the secure element. Likewise, the secure element may be configured to use the UDP as default and the terminal device may be configured to communicate using the TCP. This failure is depicted in Fig. 1 by the circle including an X. In short, such failure may easily emerge when the PUSH command trigger does not specify the transport protocol to be used, and wherein the secure element is configured with a default transport protocol that is misaligned with the transport protocol capability of the terminal device. Similarly, a mismatch between the POST parameters supported by the terminal device and requested by the secure element in sub tag '89' (HTTP POST parameter / CoAP POST parameter) when the secure element is configured with a default transport protocol that is misaligned with the transport protocol capability of the terminal device. The requirements for the respective POST parameters are specified by section 3.7 Administration Session Triggering Message of the norm Global Platform Amendment B (Remote Application Management over HTTP) and section 3.7 Administration Session Triggering Message from Global Platform Amendment M (Remote Application Management over CoAP).

In such situations the administration session may not be established, such that the applications on the secure element may not be managed remotely. In fact, the remote entity may wait for a response from the terminal device and/or the secure element, whereas the terminal device rejects the open channel request of the secure element. Accordingly, there is a deadlock between the remote entity and the secure element. As a result, the secure element may not be updated over the air, which constitutes a critical security risk.

The only possible way to break this deadlock in practice as of now is to modify the PUSH request (administration session triggering message) of the remote entity to include a parameter that configures the transport protocol and/or the POST parameters to be used in alignment with the transport protocol and/or the POST parameters that the terminal device is capable of. This solution, however, is not efficient and is hardly applicable in a 3^{rd}-party environment, in particular when the provider of the remote entity is different from the manufacturer of the secure element and/or the manufacturer or provider of the terminal device.

Hence, there is a need for at least partially reducing existing security risks in providing over-the-air updates to a secure element. Accordingly, there is a need to avoid a deadlock of a secure element upon opening an administration session.

This objective is solved with the features of the independent claims. Further advantageous embodiments are described in the dependent patent claims.

According to an aspect of the present disclosure, a secure element including at least one application to securely communicate over a mobile communication network is provided. The secure element comprises a secure storage unit, in which a configuration for remote application management and/or file management is stored. The secure element further comprises a secure control unit, which is configured to receive a capability report from a terminal device hosting the secure element. Moreover, the control unit is configured to adapt the configuration based on the received capability report.

The secure storage unit and/or the secure control unit are secured as components of the secure element. That is, the security of the storage unit and/or the control unit of the secure element is established though access restrictions implemented by mutual authentication and/or authorization mechanisms.

The terms "remote application management" and/or "remote file management" may relate to installing, deleting, loading, adapting, preparing, locking, unlocking, personalizing and/or testing of applications and/or files on the secure element by a remote entity. An application on the secure element may be a receiving application and the remote entity may be a sending entity. The capability for remote application management and/or file management in the secure element may be provided by a security domain. For exchanging data, e.g., remote application commands, between the remote entity and a security domain and/or an application on the secure element, an application protocol data unit (APDU) may be used as specified in ETSI TS 102 226 (V18.4.0).

The configuration for remote application management and/or file management may include administration session parameters, i.e., parameters that are provided with the secure element and enable the secure element to request the terminal device to establish direct connections to the remote entity for remote application management and/or file management. The administration session parameters may refer to the "Security Domain Administration Session Parameters" as specified by the Global Platform norm Card Specification v 2.3 - Amendment B or Amendment M. The remote entity and the secure element, in particular a security domain of the secure element, may establish an administration session for remotely managing at least one application installed on the secure element. The remote entity may be a remote administration server.

The configuration for remote application management and/or file management may be used by the secure control unit to personalize triggering parameters received from the remote entity. The administration session parameters of the configuration stored in the secure element may include a connection parameter, e.g., stored in sub tag '84' and/or POST parameters, stored in sub tag '89' as specified by the Global Platform norm Card Specification v 2.3 - Amendment B or Amendment M under clause 3.8, respectively. The triggering parameters may be personalized by the connection parameter and/or the POST parameters using tag '85' within a STORE DATA command in type-length-value (TLV) mode. The connection parameter and/or POST parameters may be created or updated using tag 'A5' during installation of an application in the secure control unit. Subtag '89' may comprise POST parameters which may be set either based on the Hypertext Transfer Protocol (HTTP) or on the Constrained Application Protocol (CoAP). The former uses the TCP as bearer-independent transport protocol, whereas the latter uses UDP as bearer-independent transport protocol. The structure of the connection parameter may differ in subtag '89' between a HTTP POST configuration and a CoAP POST configuration.

The connection parameter and/or POST parameters may be used for establishing the administration session between the remote entity and the secure element for remote application management and/or file management, in particular in situations, in which the remote entity does not specify which bearer-independent protocol to use.

The administration session parameters, in particular the connection parameter and/or POST parameters, may be stored in the secure storage unit of the secure element in reference to a security domain. A security domain may be a specialized application that represents a remote authority such as the remote entity for remote application management and/or file management, e.g., the remote administration server. The security domain may provide security services and manage access control for other applications and data on the card. Usually, there may be several types of security domains, reflecting the types of remote entities recognized by a secure element: An Issuer Security Domain (ISD), also known as the ISD-R (Issuer Security Domain - Root) in eUICCs, may be the primary representative of the administrator of the secure element, e.g., the RAS, typically the issuer of the secure element. A Supplementary Security Domain (SSD) may be an additional, optional representative of an application provider or the administrator, or of their agents (e.g. service bureaus). The ISD and/or the SSD may be capable of remote application management and/or file management and therefore may be configured by the connection parameter.

The secure element may include an admin agent which may be a function in charge of the management of the administration protocol used with the remote entity, e.g., RAS. The RAS may be a secure element-external function in charge of remote administration of the secure element. These functions may be implemented as standalone applications or as libraries integrated inside larger applications.

The secure element may establish a communication channel for the administration session by means of a terminal device hosting the secure element. Accordingly, the secure element may include an interface (data interface, communication interface) for communication with the terminal device, into which the secure element may be inserted ready for operation. This communication preferably takes place via a connection protocol, in particular a protocol in accordance with the ETSI TS 102 221 or ISO-7816 standard. The connection protocol may include a Card Application Toolkit (CAT) in an application layer.

The terminal device may provide a capability report which specifies its configuration. For instance, the entity may be configured for communication over either HTTP or CoAP. Initially, e.g., upon insertion of the secure element into the entity, the secure element receives the capability report of the terminal device. The capability report may be received through the TERMINAL PROFILE command as specified in ETSI TS 102 221 as command of the CAT and ETSI TS 102 223, which specifies a bitwise coding for the TERMINAL PROFILE command data.

The core idea of the invention is to make use of information that the terminal device provides to the secure element regarding its communication capabilities, in particular relating to the supported bearer-independent protocol. Adapting the configuration for remote application management and/or file management, in particular the connection parameter and/or the POST parameters of the Security Domain Administration Session Parameters based on the received capability report prevents deadlock situations as described above. Accordingly, it is ensured that the choice for the bearer-independent protocol is always aligned between the secure element and the terminal device. Even when the remote entity does not specify which bearer-independent protocol to use, a deadlock situation due to a mismatch of bearer-independent protocol configurations between the secure element and the terminal device may be avoided.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". The term secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The secure element can also be an integral part of a larger integrated circuit, such as a modem or application processor. Such UICCs are referred to as "integrated UICC", "integrated TRE", "integrated eUICC" or "integrated SE". Such secure elements are permanently integrated into an SoC as an integrated processor block and can be connected via an in-chip bus.

The SE can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

According to another aspect of the present disclosure, a system for securely communicating over a mobile communication network is provided. The system comprises a terminal device and a secure element. The secure element is included in, preferably inserted into, the terminal device and may be specified as described above. The terminal device may further include a communication interface (CI) which is adapted to communicate via the mobile communication network. The terminal device is configured to send a capability report to the secure element and to receive a request to open a communication channel for remote application management and/or file management, preferably over the communication interface.

The terminal device may send its capability report by way of a CAT command, in particular the TERMINAL PROFILE command. The capability report of the terminal device may indicate which bearer-independent protocol the terminal device supports, e.g., as specified in ETSI TS 102 223. The capability report may indicate further CAT capabilities of the terminal device.

The secure element is configured to adapt the configuration for remote application management and/or file management, in particular the connection parameter and/or POST parameters related to establishing an administration session as described above, based on the capability report received from the terminal device. Accordingly, it is ensured that the choice for the bearer-independent protocol is always aligned between the secure element and the terminal device such that deadlock situations as described above may be systematically prevented.

According to a further aspect of the present disclosure, a method for configuring a secure element including at least one application to securely communicate over a mobile communication network is provided. The secure element further includes a configuration for remote administration of the at least one application. The method includes receiving, by the secure element, a capability report from the terminal device external to the secure element. The method further includes adapting, by the secure element, the configuration based on the received capability report.

The capability report of the terminal device may indicate which bearer-independent protocol the terminal device supports. The capability report may indicate further CAT capabilities of the terminal device.

The adapting step may include adapting the connection parameter and/or POST parameters related to establishing an administration session as described above based on the capability report received from the terminal device. Accordingly, it is ensured that the choice for the bearer-independent protocol is always aligned between the secure element and the terminal device such that deadlock situations as described above may be systematically prevented.

The secure element, the corresponding system and/or the method according to above aspects may further include one or more of the following features:
The capability report may be encoded in a sequence of bytes that is provided by the terminal device to the secure element upon hosting the secure element or upon an update of the terminal device.

The capability report may be transmitted from the terminal device to the secure control unit of the secure element by a TERMINAL PROFILE command.

The capability report may include a byte that represents which bearer-independent protocol is supported by a transport interface of the terminal device. The byte may be the seventeenth byte as specified in ETSI TS 102 223 under clause 5.2. Accordingly, the transport interface of the entity may either support TCP and/or UDP for a remote connection. The byte may include 8 bits as specified in ETSI TS 102 223, of which, e.g., a first bit, b1, may specify the TCP, when the secure element is in client mode, for a remote connection and the second bit, b2, may specify the UDP, when the secure element is in client mode, for a remote connection. This disclosure is particularly relevant to situations in which the byte in the capability report only indicates one of the two options for the BIP.

The configuration may include a connection parameter and/or POST parameters, which may be preferably pre-stored in the secure storage unit. The connection parameter may be represented by an attribute, in which a default bearer-independent protocol for use with opening a communication channel is stored. The POST parameters may be represented by a set of attributes, in which a configuration for HTTP POST or CoAP POST for use with opening a communication channel is stored.

The administration session parameters may include the connection parameter and POST parameters, and may be stored in relation to a security domain. The administration session parameters may be accessed by the tag '85' or 'A5'. The configuration for the default bearer-independent protocol for use with opening a communication channel to a remote entity may be accessed by the subtag '84' in combination with the subtag '89'. The administration session parameters may represent the Security Domain Administration Session Parameters as specified in the Global Platform norm Card Specification v 2.3 - Amendment B for HTTP or Amendment M for CoAP.

The security domain may act as an admin agent for the remote application management and/or file management. The admin agent may be in charge of the management of an administration protocol used with a remote administration server, also called the Admin Server. The admin agent may receive and forward administration commands.

The secure control unit may be configured to override the attribute based on the received capability report, in particular TERMINAL PROFILE.

The secure control unit may be configured to override a hexadecimal value stored as connection parameter under the subtag '84' to specify whether UDP or TCP shall be used as transport protocol for a remote connection. In addition, the secure control unit may be configured to override the hexadecimal values stored as POST parameters under the subtag '89', i.e., set either subtag '8C' (Administration URI parameter) for TCP or subtag 'AC' (CoAP administration URI parameter). The respective configurations of subtag '89' may be aligned with Table 3-4 of the Global Platform norm Card Specification v 2.3 - Amendment B and Table 3-6 of the Global Platform norm Card Specification v 2.3 - Amendment M, respectively.

The secure control unit may be configured to override the attribute based on a byte of the received capability report. The byte may represent which bearer-independent protocol is supported by a transport interface of the terminal device.

The byte may be the seventeenth byte of the TERMINALE PROFILE command, as specified in ETSI TS 102 223 under clause 5.2.

The secure control unit may be configured to determine whether the connection parameter matches the bearer-independent protocol supporting the transport interface of the terminal device. When the connection parameter does not match the bearer-independent protocol, the secure control unit may be configured to override the attribute with the bearer-independent protocol included in the received capability report.

The secure control unit may be further configured to determine whether the POST parameters match the respective POST parameters supported by the terminal device. When the POST parameters do not match the supported POST parameters, the secure control unit may be configured to override the attributes in which the POST parameters are stored with the POST parameters included in the received capability report.

In case the connection parameter specifies a bearer-independent protocol which is aligned with the one indicated by the terminal device, the attribute storing the connection parameter may not need to be overridden. Similarly, in case the POST parameters are aligned with the ones indicated by the terminal device in its capability report, the attributes storing the POST parameters may not need to be overridden.

The secure element may be any of the group consisting of a smart card, a subscriber identity module - SIM, an embedded SIM, an integrated SIM, a software application, and combinations thereof.

The secure control unit may be configured to manage a direct remote connection to a function of a service provider in charge of administrating the secure element. The function of a service provider in charge of administrating the secure element may be the RAS. Accordingly, the admin agent may be a function of a security domain of the secure control unit.

The request to open a communication channel, preferably to a remote entity such as the RAS, may be an Administration Session Triggering Message. The Administration Session Triggering Message may result from an external event, for example a message sent by a remote or off-card entity; an internal event, for example a timer; and/or an application using a dedicated API method. The Administration Session Triggering Message sent by a remote or off-card entity may be also referred to as PUSH command. The Administration Session Triggering Message may preferably leave out in indication which bearer-independent protocol to use for establishing the communication channel.

The method may further comprise overriding, by the secure element, an attribute of the configuration, in which a connection parameter is stored. The byte may represent which bearer-independent protocol is supported by a transport interface of the terminal device.

According to another aspect of the present disclosure, a computer program comprising instructions which, when the program is executed by a secure element according to any one of the above aspects, cause the secure element to execute the steps of the method according to any of the above aspects.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary flow chart of the communication between a remote application server, a terminal device and secure element hosted by the terminal device according to prior art.
Fig. 2a shows an exemplary embodiment of a secure element according to an aspect of the invention.
Fig. 2b shows an exemplary embodiment of a system including a secure element and a terminal device according to an aspect of the invention.
Fig. 3 shows an example flow chart of the communication between a remote application server, a terminal device and secure element hosted by the terminal device according to an aspect of the invention.

The exemplary flow chart depicted in Fig. 1, which relates to a critical failure during establishing a communication channel for remote application management and/or file management is essentially discussed above as technical background within the scope of the present disclosure.

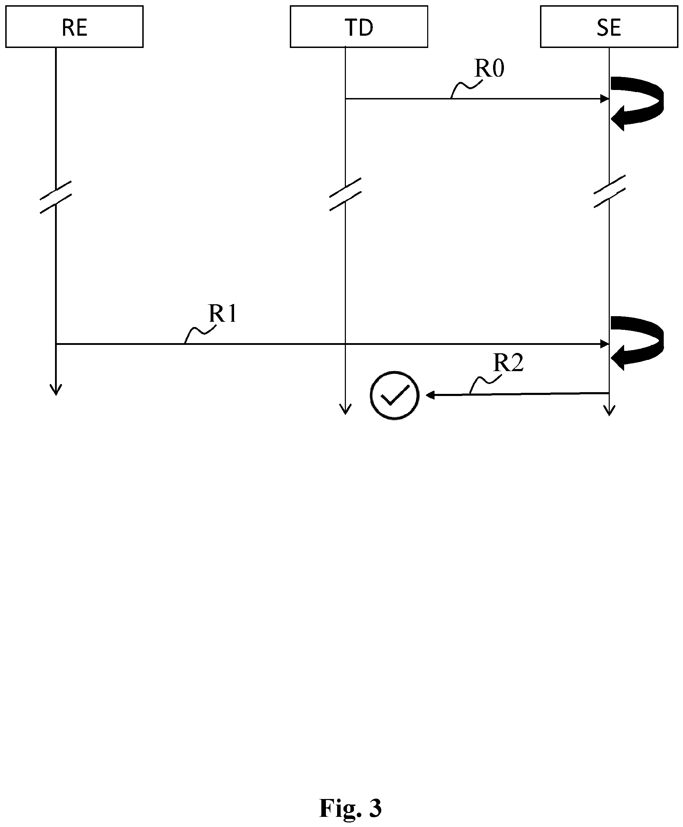

A remote entity, which is simply denoted as "server" in Fig. 1, which is in charge as RAS, may request a new administrative session using Administration Session Triggering Message using the PUSH command without subtag in its administration session parameters, tag '81'. This command is denoted by R1 in Fig. 1 (and Fig. 3). The PUSH command is received by the secure element SE, more precisely by a security domain SD of the secure element SE, which is denoted in Fig. 1 as "UICC OS". Any parameter needed to start the Administration Session and not present in this triggering message shall be completed with the corresponding parameter of the triggered security domain SD. If the triggered security domain SD cannot provide this parameter, it shall be completed with the corresponding parameter of the issuer security domain (ISD).

The security domain SD may act as admin agent for remote application management and/or file management. The security domain SD is configured to check the necessary triggering parameters in the PUSH command under tag ,81'. If the connection parameter and/or POST parameters are missing then the security domain SD is configured to check the necessary triggering parameter from tag ,85'/'A5' (Security Domain Administration Session Parameters) which are pre stored in the security domain SD. Once all necessary triggering parameters are collected, the security domain SD is configured to send an OPEN CHANNEL command to set up the connection with the Remote Administration Server via the terminal device., i.e., "terminal" in Fig. 1, establish the required security level, and prepare the content of subsequent requests

In the example of Fig. 1, the terminal device TD only supports UDP on its transport interface. The admin agent, or the security domain implementing the admin agent, is configured with HTTP session parameters, therefore supporting TCP as transport protocol.

An immediate consequence of this situation is that the admin agent issues an OPEN CHANNEL R2 that requests a transport protocol that is incompatible with the capabilities of the transport interface of the terminal device. The terminal device therefore cannot establish a communication channel to the server, such that the applications on the secure element SE may not be remotely managed, which constitutes a critical security risk. The server may wait for a response from the terminal device TD and/or the secure element SE, whereas the terminal device TD rejects the OPEN CHANNEL command of the admin agent. Accordingly, there is a deadlock between the server and the secure element SE.

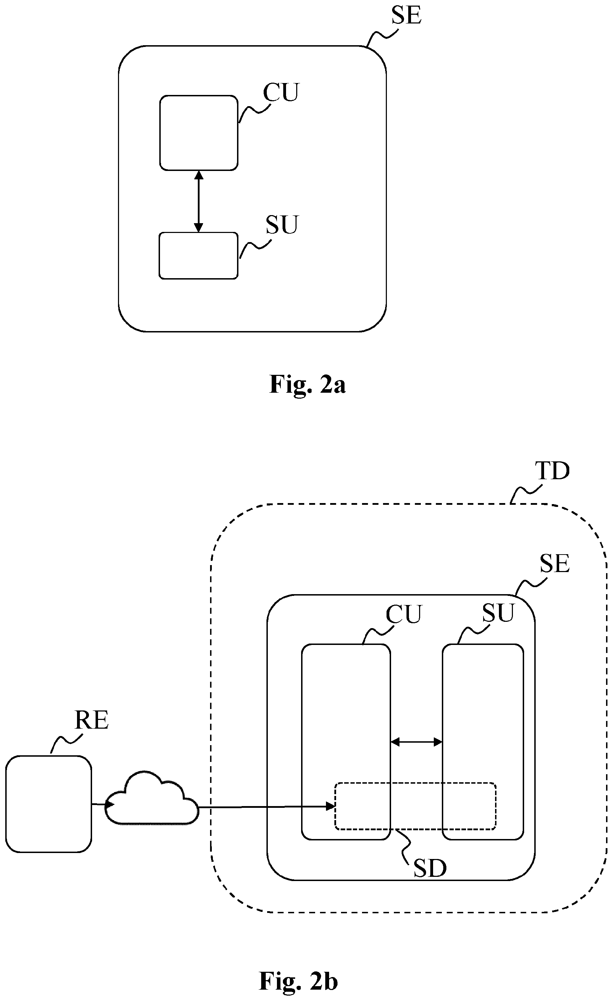

Fig. 2a shows an exemplary embodiment of a secure element SE according to an aspect of the invention.

The secure element SE includes at least one application (not shown) to securely communicate over a mobile communication network. The secure element SE may require connection to a terminal device TD (not shown) for establishing communication to a remote entity. The secure element SE may further include a security domain SD (not shown). The at least one application may be remotely manageable, wherein the security domain SD may act as administration agent, or admin agent, on the secure element SE.

The secure element comprises a secure storage unit SU, in which a configuration for remote application management and/or file management is stored. The configuration may be related to a security domain SD which acts as admin agent. The configuration may include a connection parameter and/or POST parameters, which may be stored in an attribute that is accessible by tag '85' or 'A5'. More specifically, the STORE DATA command with tag '85' (in TLV mode) may be used to create or update the complete set of Security Domain Administration Session Parameters, including the connection parameter and/or the POST parameters. The STORE DATA command with tag 'A5' (in TLV mode) may be used to create, update or remove sub-TLVs of the Security Domain Administration Session Parameters, including the connection parameter and/or the POST parameters.

The secure element SE further comprises a secure control unit CU, which is configured to receive a capability report from the terminal device TD. The capability report may be transmitted to the secure element SE by way of the TERMINAL PROFILE command and may include information on the capability of the transport interface of the individual terminal device.

Moreover, the control unit CU is configured to adapt the configuration based on the received capability report. In particular, the control unit CU may override the hexadecimal value stored under the subtag '84' to specify whether UDP or TCP shall be used as transport protocol for a remote connection. In addition, the secure control unit may be configured to override the hexadecimal values stored under the subtag '89', i.e., set either subtag '8C' (Administration URI parameter) under HTTP POST parameters or subtag 'AC' (CoAP administration URI parameter) under CoAP POST parameters. The respective configurations of subtag '89' may be aligned with Table 3-4 of the Global Platform norm Card Specification v 2.3 - Amendment B and Table 3-6 of the Global Platform norm Card Specification v 2.3 - Amendment M, respectively.

This functionality of the control unit CU may be provided in a dedicated application (applet) which is registered for the TERMINAL PROFILE command and trigger only once per secure element when the terminal profile is received and/or in case the Security Domain Administration Session Parameters including the connection parameter and/or the POST parameters (tag '85' or ' A5', subtag '84', value 'BC' /'3C') are updated based on a different mechanism.

Fig. 2b shows an exemplary embodiment of a system including a secure element SE and a terminal device TD according to an aspect of the invention.

The secure element SE is included in the terminal device TD, e.g., by inserting the secure element SE into to the terminal device TD or as a software package that is securely encapsulated in the terminal device TD.

The remote entity RE, which may include a RAS functionality may trigger the secure element SE, in particular the admin agent, i.e., the security domain SD which represents the remote administration functionality by acting as admin agent, to open a new communication channel or Administration Session.

The secure element SE in the example of Fig. 2a and 2b is configured with a connection parameter that is aligned with the capabilities of the transport interface of the terminal device TD due to the above described functionality of the secure control unit CU. Accordingly, the secure element SE may provide the terminal device TD an OPEN CHANNEL command that the terminal device is able to execute, even when the remote entity RE leaves out to specify which transport protocol to be used.

Fig. 3 shows an example flow chart of the communication between a remote application server, a terminal device TD and secure element SE hosted by the terminal device TD, according to an aspect of the invention.

When compared to the situation depicted in the flow chart of Fig. 1, the communication according to the flow chart of Fig. 3 further includes a step R0, by which the security domain SD of the secure element SE that acts as admin agent is configured with a connection parameter that matches the capabilities of the terminal device TD, in particular of the transport interface of the terminal device TD.

The underlying idea is to provide the secure control unit CU with a function, e.g., an Applet application, which is registered for the Terminal Profile command of the terminal device TD. Accordingly, the function may trigger only once per identifier of the secure element SE, e.g., IMEI, when the capability report of the terminal device TD is received and/or if the Security Domain Administration Session Parameters are updated based on a different mechanism.

In other words, the control unit CU may monitor the capability report received from the terminal device TD. More specifically, the control unit CU may monitor a specific byte representing the individual device capability regarding which transport protocol out of TCP and/or UDP is supported, e.g., the Terminal Profile seventeenth byte as per ETSI 102 223. For instance, the seventeenth byte may include 8 bits as specified in ETSI TS 102 223, of which, e.g., a first bit, b1, may specify the TCP, when the secure element is in client mode, for a remote connection and the second bit, b2, may specify the UDP, when the secure element is in client mode, for a remote connection.

The secure element SE in the example of Fig. 3 is thus configured with a connection parameter that is aligned with the capabilities of the transport interface of the terminal device TD due to the above described functionality of the secure control unit CU. Accordingly, the secure element SE may provide the terminal device TD an OPEN CHANNEL command R2 that the terminal device is able to execute, even when the remote entity RE leaves out an indication of which transport protocol to be used in its original PUSH command R1.

The advantage of the above-described functionality of the secure control unit CU of the secure element, in particular the admin agent, is that security critical deadlock situations as present in prior art and as described with respect to Fig. 1 may be systematically avoided. The result is an even more secure operation and management of the applications on the secure element SE.

### Reference signs:

- SE: Secure element
- SU: Secure storage unit
- CU: Secure control unit
- SD: Security Domain

- TD: Terminal device

- RE: Remote entity

- R0: TERMINAL PROFILE command
- R1: PUSH command of remote entity
- R2: OPEN CHANNEL command of secure element

## Claims

1. A secure element (SE) including at least one application to securely communicate over a mobile communication network, the secure element (SE) comprising:
a secure storage unit (SU), in which a configuration for remote application management and/or file management is stored; and
a secure control unit (CU) which is configured to:
receive a capability report from a terminal device (TD) hosting the secure element (SE), and
adapt the configuration based on the capability report.

2. The secure element (SE) of claim 1,wherein the capability report is encoded in a sequence of bytes that is provided by the terminal device (TD) to the secure element (SE) upon hosting the secure element (SE) or upon an update of the terminal device (TD).

3. The secure element (SE) of claim 1 or 2, wherein the capability report is received by way of a TERMINAL PROFILE command.

4. The secure element (SE) of any one of the preceding claims, wherein the capability report includes a byte that represents which bearer-independent protocol is supported by a transport interface of the terminal device (TD).

5. The secure element (SE) of any one of the preceding claims, wherein the configuration includes a connection parameter, which is preferably pre-stored in the secure storage unit (SU), and wherein the connection parameter includes an attribute, in which a default bearer-independent protocol for use with opening a communication channel is stored.

6. The secure element (SE) of claim 5, wherein the secure control unit (CU) is configured to override the attribute based on the capability report.

7. The secure element (SE) of claim 6, wherein the secure control unit (CU) is configured to override the attribute based on a byte of the capability report, wherein the byte represents which bearer-independent protocol is supported by a transport interface of the terminal device (TD).

8. The secure element (SE) of any one of claims 5 to 7, wherein the secure control unit (CU) is configured to determine whether the connection parameter matches the bearer-independent protocol supporting the transport interface of the terminal device (TD), and, when the connection parameter does not match the bearer-independent protocol, override the attribute with the bearer-independent protocol included in the capability report.

9. The secure element (SE) according to any of the preceding claims, being any of the group consisting of:
a smart card,
a subscriber identity module - SIM,
an embedded SIM,
an integrated SIM,
a software application, and
combinations thereof.

10. The secure element (SE) according to any of the preceding claims, wherein the secure control unit (CU) is configured to manage a direct remote connection to a function of an entity external to the secure element (SE) and the terminal device (TD) in charge of administrating the secure element (SE).

11. A system for securely communicating over a mobile communication network, the system comprising:
a terminal device (TD) comprising a secure element (SE) according to any one of the preceding claims;
wherein the terminal device (TD) is configured to:
send its capability report to the secure element (SE), and
receive a request to open a communication channel for remote application management and/or file management.

12. The system of claim 11, wherein the request is a PUSH command, and wherein the request preferably leaves out an indication which bearer-independent protocol to use for establishing the communication channel.

13. A method for configuring a secure element (SE) including at least one application to securely communicate over a mobile communication network, wherein the method is executed in the system of claim 11 or 12, the method comprising:
Receiving, by the secure element (SE), a capability report from the terminal device (TD) external to the secure element (SE), and
Adapting, by the secure element (SE), the configuration based on the received capability report.

14. The method of claim 13, further comprising overriding, by the secure element (SE), an attribute of the configuration, in which a connection parameter is stored, based on a byte of the received capability report, wherein the byte represents which bearer-independent protocol is supported by a transport interface of the terminal device.

15. A computer program comprising instructions which, when the program is executed by a secure element (SE) according to any one of claims 1 to 10, cause the secure element (SE) to execute the steps of the method according to claim 13 or 14.

## Amended claims

### Amended claims in accordance with Rule 137(2) EPC.

1. A secure element (SE) including at least one application to securely communicate over a mobile communication network using a bearer-independent protocol, BIP, the secure element (SE) comprising:
a secure storage unit (SU), in which a configuration for remote application management and/or file management is stored; and
a secure control unit (CU) which is configured to:
receive a capability report from a terminal device (TD) hosting the secure element (SE), wherein the capability report indicates which BIP the terminal device (TD) supports, and
adapt the configuration based on the capability report to align a choice of the BIP between the secure element (SE) and the terminal device (TD).

2. The secure element (SE) of claim 1,wherein the capability report is encoded in a sequence of bytes that is provided by the terminal device (TD) to the secure element (SE) upon hosting the secure element (SE) or upon an update of the terminal device (TD).

3. The secure element (SE) of claim 1 or 2, wherein the capability report is received by way of a TERMINAL PROFILE command.

4. The secure element (SE) of any one of the preceding claims, wherein the capability report includes a byte that represents which bearer-independent protocol is supported by a transport interface of the terminal device (TD).

5. The secure element (SE) of any one of the preceding claims, wherein the configuration includes a connection parameter, which is preferably pre-stored in the secure storage unit (SU), and wherein the connection parameter includes an attribute, in which a default bearer-independent protocol for use with opening a communication channel is stored.

6. The secure element (SE) of claim 5, wherein the secure control unit (CU) is configured to override the attribute based on the capability report.

7. The secure element (SE) of claim 6, wherein the secure control unit (CU) is configured to override the attribute based on a byte of the capability report, wherein the byte represents which bearer-independent protocol is supported by a transport interface of the terminal device (TD).

8. The secure element (SE) of any one of claims 5 to 7, wherein the secure control unit (CU) is configured to determine whether the connection parameter matches the bearer-independent protocol supporting the transport interface of the terminal device (TD), and, when the connection parameter does not match the bearer-independent protocol, override the attribute with the bearer-independent protocol included in the capability report.

9. The secure element (SE) according to any of the preceding claims, being any of the group consisting of:
a smart card,
a subscriber identity module - SIM,
an embedded SIM,
an integrated SIM,
a software application, and
combinations thereof.

10. The secure element (SE) according to any of the preceding claims, wherein the secure control unit (CU) is configured to manage a direct remote connection to a function of an entity external to the secure element (SE) and the terminal device (TD) in charge of administrating the secure element (SE).

11. A system for securely communicating over a mobile communication network, the system comprising:
a terminal device (TD) comprising a secure element (SE) according to any one of the preceding claims;
wherein the terminal device (TD) is configured to:
send its capability report to the secure element (SE), and
receive a request to open a communication channel for remote application management and/or file management.

12. The system of claim 11, wherein the request is a PUSH command, and wherein the request preferably leaves out an indication which bearer-independent protocol to use for establishing the communication channel.

13. A method for configuring a secure element (SE) including at least one application to securely communicate over a mobile communication network using a BIP, wherein the method is executed in the system of claim 11 or 12, the method comprising:
Receiving, by the secure element (SE), a capability report from the terminal device (TD) external to the secure element (SE), wherein the capability report indicates which BIP the terminal device (TD) supports, and
Adapting, by the secure element (SE), the configuration based on the received capability report to align a choice of the BIP between the secure element (SE) and the terminal device (TD).

14. The method of claim 13, further comprising overriding, by the secure element (SE), an attribute of the configuration, in which a connection parameter is stored, based on a byte of the received capability report, wherein the byte represents which bearer-independent protocol is supported by a transport interface of the terminal device.

15. A computer program comprising instructions which, when the program is executed by a secure element (SE) according to any one of claims 1 to 10, cause the secure element (SE) to execute the steps of the method according to claim 13 or 14.
